# EUROPÄISCHE PATENTSCHRIFT

(11) **EP 0 428 837 B1**
(45) Veröffentlichungstag und Bekanntmachung des Hinweises auf die Patenterteilung: **29.09.1993**
(21) Anmeldenummer: 90116345.1
(22) Anmeldetag: 27.08.1990
(51) Int. Cl.: B60J 5/10, B62D 35/00

(54) **Heckklappe für ein Kraftfahrzeug**
Rear door for motor vehicle
Hayon arrière pour véhicule

(30) Priorität: 20.11.1989 DE 3938476
(43) Veröffentlichungstag der Anmeldung: 29.05.1991
(73) Patentinhaber: Dr.Ing.h.c. F. Porsche Aktiengesellschaft, 70435 Stuttgart (DE)
(72) Erfinder: Burst, Hermann, Dipl.-Ing., D-7255 Rutesheim (DE); Gösse, August-Wilhelm, Dipl.-Ing. FH, D-7251 Mönsheim (DE); Schädlich, Günter, D-7252 Weil der Stadt 2 (DE); Hötzer Georg, D-7141 Schwieberdingen (DE)

(56) Entgegenhaltungen:
- EP-A- 0 122 545
- EP-A- 0 368 817
- WO-A-88/04985
- DE-U- 7 814 079
- GB-A- 2 092 655
- PATENT ABSTRACTS OF JAPAN, Band 13, Nr. 122 (M-807)[3470], 27. März 1989;& JP-A-63 297 009 (HASHIMOTO FORMING) 05-12-1988
- PATENT ABSTRACTS OF JAPAN, Band 12, Nr. 262 (M-721)[3109], 22. Juli 1988;& JP-A-63 45 012 (NISSAN MOTOR) 26-02-1988

## Beschreibung

Die Erfindung bezieht sich auf ein Kraftfahrzeug mit einem Einfaßrahmen, der umlaufend mit einem Randbereich einer Scheibe verklebt ist, wobei der Einfaßrahmen zumindest in einem Teilbereich seiner Umfangserstreckung ein an der Außenseite der Scheibe und am Einfaßrahmen aufliegendes, durch einen elastischen Körper gebildetes Verkleidungsteil aufweist.

Eine bekannte Heckklappe der eingangs genannten Gattung (DE-U- 78 14 079) weist einen Einfaßrahmen auf, der umfangsseitig über eine Flächenklebung mit einem Randbereich einer Heckscheibe verbunden ist. Zur Verbesserung des Luftwiderstandsbeiwertes ist am hinteren querverlaufenden Bereich und abschnittsweise an den beiden seitlichen, längsgerichteten Bereichen des Einfaßrahmens ein eine Luftleitvorrichtung bildendes Verkleidungsteil vorgesehen, das mit dem darunterliegenden Einfaßrahmen örtlich verschraubt ist. Das Verkleidungsteil besteht aus einem elastischen Körper aus PU-Schaum, in dem ein Halteteil eingebettet ist.

Diese Heckklappe weist eine gute Funktion auf. Nachteilig daran ist, daß das Verkleidungsteil separat hergestellt ist und nachträglich mit dem Einfaßrahmen verbunden werden muß, wodurch die Herstellung und die Montage zeitaufwendig sind. Darüberhinaus wird eine Vielzahl von Befestigungselementen zum Verbinden von Einfaßrahmen und Verkleidungsteil benötigt. Die Montage des Verkleidungsteils muß exakt durchgeführt werden, damit kein Wassereintritt zwischen der Scheibe, dem Einfaßrahmen und dem Verkleidungsteil hindurch in den darunterliegenden Kofferraum erfolgen kann. Aufgrund der vielen Befestigungsstellen für das Verkleidungsteil können Toleranzprobleme bei der Montage auftreten.

Aufgabe der Erfindung ist es, eine Heckklappe mit einer in einem Einfaßrahmen befestigten Scheibe und einem Verkleidungsteil zu schaffen, die einen einfachen Aufbau aufweist, schnell und kostengünstig herstellbar ist und die die Anforderungen bezüglich der Dichtheit zuverlässig erfüllt.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch das unmittelbare Umschäumen des Einfaßrahmens und eines Randbereiches der Scheibe eine Heckklappe mit einem Verkleidungsteil geschaffen wird, die einen einfachen Aufbau aufweist (wenig Bauteile), schnell und kostengünstig herstellbar ist und bei der der Montageaufwand wesentlich reduziert ist. Zusätzliche Befestigungselemente für das Verkleidungsteil sind nicht erforderlich. Es ist stets ein einwandfreier Sitz des Verkleidungsteiles relativ zum Einfaßrahmen und zur Scheibe gewährleistet. Auch treten bei dieser Heckklappe keine Toleranzprobleme bei der Montage auf und ein Wassereintritt zwischen Einfaßrahmen, Scheibe und Verkleidungsteil hindurch in den darunterliegenden Kofferraum wird vermieden.

Ein Ausführungsbeispiel der Erfindung ist in der Zeichnung dargestellt und wird im folgenden näher erläutert.

Es zeigt:
- Fig. 1: eine Schrägansicht auf eine Heckklappe eines Kraftfahrzeuges,
- Fig. 2: einen Schnitt nach der Linie II-II der Fig. 1 in größerem Maßstab,
- Fig. 3: einen Schnitt nach der Linie III-III der Fig. 1 in größerem Maßstab,
- Fig. 4: einen Schnitt nach der Linie IV-IV der Fig. 1 in größerem Maßstab,
- Fig. 5: eine Schrägansicht gemäß Fig. 1 auf eine weitere Ausführungsform einer Heckklappe
für ein Kraftfahrzeug,
- Fig. 6: einen Schnitt nach der Linie VI-VI der Fig. 5 in größerem Maßstab.

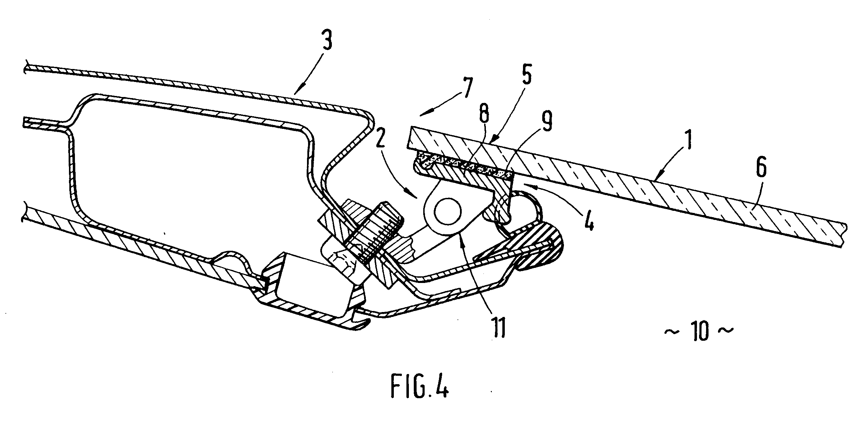

Das Kraftfahrzeug umfaßt im dargestellten Bereich eine Heckklappe 1, die an verdeckt angeordneten Scharnieren 2 an einem Aufbau 3 angelenkt ist (Fig. 4). Die Heckklappe 1 wird gebildet durch einen Einfaßrahmen 4, der umlaufend mit einem Randbereich 5 einer Scheibe 6 verklebt ist.

Der Einfaßrahmen 4 ist mehrteilig ausgebildet, wobei die einzelnen Teile durch Schweißen miteinander verbunden sind. Am querverlaufenden oberen Rand 7 der Heckklappe 1 wird der Einfaßrahmen 4 durch ein stufenförmig gestaltetes Strangpreßprofil 8 gebildet, das über einen Klebekörper 9 mit einer einen Kofferraum 10 zugekehrten Seite (Innenseite) der Scheibe 6 verbunden ist. An diesem Strangpreßprofil 8 sind örtlich die heckdeckelseitigen Scharnierhälften 11 der Scharniere 2 angebracht (Fig. 4). Dies erfolgt durch Schweißen.

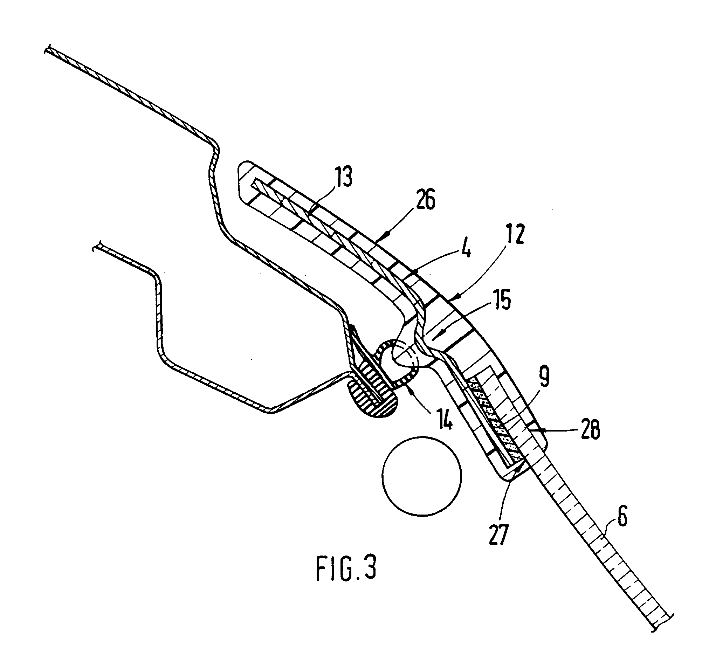

In einem seitlich außenliegenden, längsgerichteten Bereich 12 wird der Einfaßrahmen 4 durch ein profiliertes Blechteil 13 gebildet, das ebenfalls über den Klebekörper 9 mit der Innenseite der Scheibe 6 verbunden ist (Fig. 3). Das Blechteil 13 weist im Bereich eines aufbauseitigen Dichtkörpers 14 eine nach innen zum Dichtkörper 14 hin gerichtete Eindrückung 15 auf.

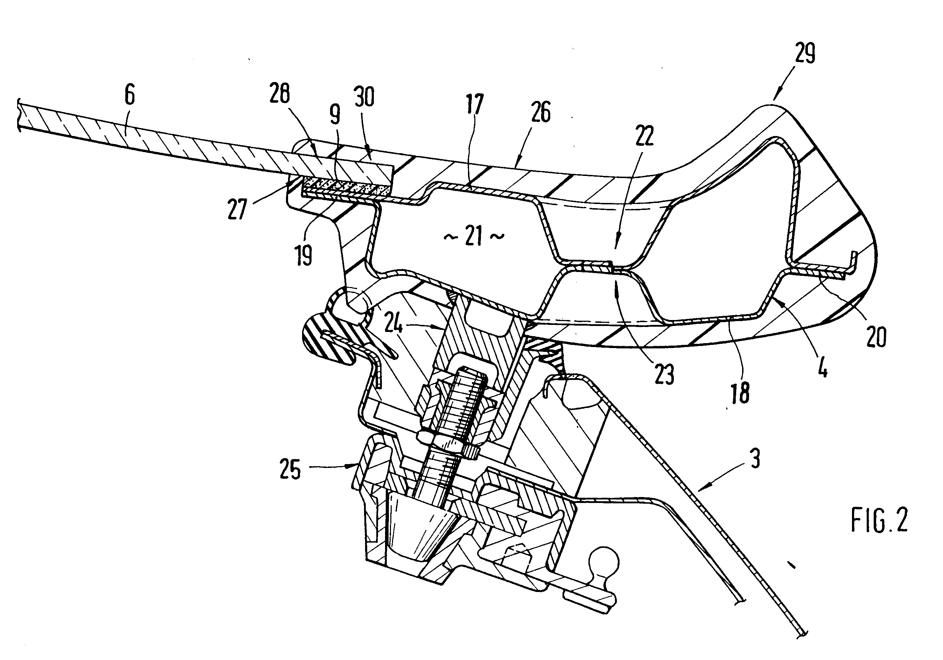

Im hinteren querverlaufenden Bereich 30 der Heckklappe 1 besteht der Einfaßrahmen 4 aus zwei Blechpreßteilen 17, 18, die an gleichgerichteten endseitigen Flanschen 19, 20 zusammengesetzt sind und einen kastenförmigen Hohlträger 21 bilden (Fig. 2). Örtlich sind an beiden Blechpreßteilen 17, 18 topfartige nach innen gerichtete Einprägungen 22, 23 vorgesehen, wobei die beiden gegenüberliegenden Einprägungen 22, 23 bodenseitig aneinander anliegen. Am Hohlträger 21 sind örtlich Schloßaufnahmen 24 angebracht, die von der Innenseite des Hohlträgers 21 schräg nach unten hin abragen und mit einem aufbauseitigen Schloß 25 zusammenwirken. Die Scheibe 6 liegt unter Vermittlung des Klebekörpers 9 am abgesetzten Flansch 19 des kastenförmigen Hohlträgers 21 auf und ist daran befestigt. Der gesamte Einfaßrahmen 4 ist in Leichtmetall- (Aluminium) oder Stahlbauweise gefertigt.

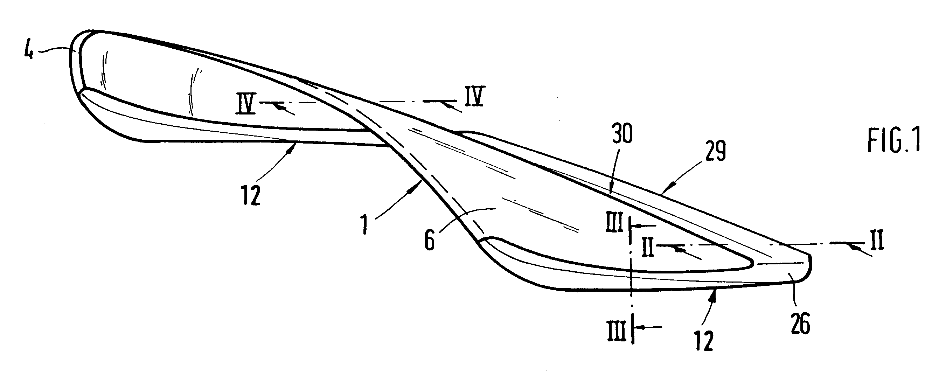

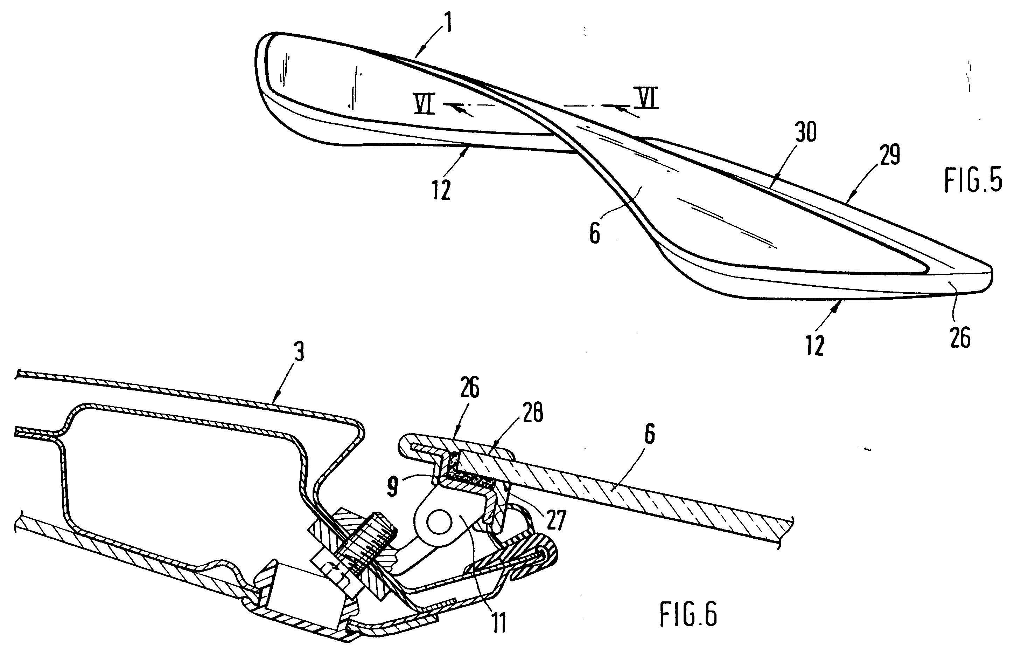

Erfindungsgemäß ist die Heckklappe 1 mit einem Verkleidungsteil 26 versehen, das sich gemäß Fig. 1 entlang des hinteren querverlaufenden Bereiches 30 und entlang der beiden seitlich außenliegenden längsgerichteten Bereiche 12 des Einfaßrahmens 4 erstreckt. Am oberen Rand der Heckklappe 1 ist entsprechend Fig. 1 kein Verkleidungsteil vorgesehen zum Unterschied von Fig. 5, wo das Verkleidungsteil 26 entlang der gesamten Umfangserstreckung des Einfaßrahmens 4 verläuft. Das Verkleidungsteil 26 wird durch unmittelbares Umschäumen des Einfaßrahmens 4 und eines Randbereiches 5 der Scheibe 6 gebildet. Gemäß den Fig. 2, 3 und 6 erstreckt sich das Verkleidungsteil 26 über den gesamten Umfang der Querschnittsform des Einfaßrahmens 4 mit Ausnahme des Bereiches, in dem sich der Klebekörper 9 befindet. Ferner deckt das Verkleidungsteil 26 einen innenliegenden Randbereich 27 und einen außenliegenden Randbereich 28 der Scheibe 6 ab. Das Verkleidungsteil 26 ist aus PU-Schaum oder einem anderen geeigneten Schaum gefertigt, wobei die Oberfläche der Umschäumung decklackierfähig ist.

Der hintenliegende querverlaufende Bereich 30 und/oder die seitlich außenliegenden längsgerichteten Bereiche 12 von Einfaßrahmen 4 und Verkleidungsteil 26 sind entsprechend der Fig. 1, 2 und 5 so ausgebildet, daß sie eine heckseitige Luftleitvorrichtung 29 bilden.

Die Fertigung der Heckklappe 1 samt der heckklappenseitigen Scharnierhälften 11, den Schloßaufnahmen 24 und den nicht näher gezeigten kugelkopfartigen Anlenkpunkten für die Gasfedern erfolgt in der Weise, daß die über den Klebekörper 9 umfangsseitig mit dem Einfaßrahmen 4 verbundene Scheibe 6 zusammen mit dem Einfaßrahmen 4 in ein Schäumwerkzeug eingelegt wird und daß danach der gewünschte Umfangsbereich von Einfaßrahmen 4 und Scheibe 6 in einem Arbeitsgang mit der das Verkleidungsteil 26 bildenden Umschäumung aus PU-Schaum versehen wird.

## Patentansprüche

1. Heckklappe (1) für ein Kraftfahrzeug mit einem Einfaßrahmen (4), der umlaufend mit einem Randbereich einer Scheibe (6) verklebt ist, wobei der Einfaßrahmen (4) zumindest in einem Teilbereich seiner Umfangserstreckung ein an der Außenseite der Scheibe und am Einfaßrahmen (4) aufliegendes, durch einen elastischen Körper gebildetes Verkleidungsteil (26) aufweist, dadurch gekennzeichnet, daß das Verkleidungsteil (26) durch unmittelbares Umschäumen des Einfaßrahmens (4) und eines Randbereiches (5, 27, 28) der Scheibe (6) gebildet wird.

2. Heckklappe nach Anspruch 1, dadurch gekennzeichnet, daß sich das Verkleidungsteil (26) mit Ausnahme eines Bereiches für den Klebekörper (9) über den gesamten Umfang der Querschnittsform des Einfaßrahmens (4) sowie einem innenliegenden Randbereich (27) und einem außenliegenden Randbereich (28) der Scheibe (6) erstreckt.

3. Heckklappe nach Anspruch 1, dadurch gekennzeichnet, daß der Einfaßrahmen (4) örtlich durch zwei Blechpreßteile (17, 18) gebildet wird, die an gleichgerichteten endseitigen Flanschen (19, 20) zu einem kastenförmigen Hohlträger (21) zusammengesetzt sind.

4. Heckklappe nach Anspruch 1, dadurch gekennzeichnet, daß der Einfaßrahmen (4) örtlich durch ein stufenförmig profiliertes Strangpreßprofil (8) gebildet wird.

5. Heckklappe nach Anspruch 1, dadurch gekennzeichnet, daß der Einfaßrahmen (4) aus Leichtmetall (Aluminium) gefertigt ist.

6. Heckklappe nach Anspruch 1, dadurch gekennzeichnet, daß am Einfaßrahmen (4) heckklappenseitige Scharnierhälften (11), Schloßaufnahmen (24) und kugelkopfartige Anlenkpunkte für Gasfedern angebracht sind.

7. Heckklappe nach Anspruch 1, dadurch gekennzeichnet, daß ein hintenliegender, querverlaufender Bereich (30) und/oder seitlich außenliegende, längsverlaufende Bereiche (12) des Einfaßrahmens (4) und des Verkleidungsteiles (26) derart ausgebildet sind, daß sie eine heckseitige Luftleitvorrichtung (29) bilden.

8. Heckklappe nach Anspruch 1, dadurch gekennzeichnet, daß das Verkleidungsteil (26) entlang der gesamten Umfangserstreckung des Einfaßrahmens (4) angeordnet ist.

9. Heckklappe nach Anspruch 1, dadurch gekennzeichnet, daß das Verkleidungsteil (26) lediglich im hinteren, querverlaufenden Bereich (30) und/oder entlang von seitlich außenliegenden längsgerichteten Bereichen (12) des Einfaßrahmens (4) und der Scheibe (6) vorgesehen ist.

10. Verfahren zur Herstellung einer Heckklappe nach Anspruch 1, dadurch gekennzeichnet, daß die über einen Klebekörper (9) umfangsseitig mit dem Einfaßrahmen (4) verbundene Scheibe (6) zusammen mit dem Einfaßrahmen (4) in ein Schäumwerkzeug eingelegt wird und daß danach der gewünschte Umfangsbereich von Einfaßrahmen (4) und Scheibe (6) mit einer das Verkleidungsteil (26) bildenden Umschäumung versehen wird.

## Claims

1. A tailgate (1) for a motor vehicle with a bordering frame (4) adhering around the periphery thereof to an edge area of a window (6), wherein the bordering frame (4) is provided at least in a partial area of the peripheral extension thereof with a covering part (26) applied to the outside of the window and to the bordering frame (4) and formed by a resilient member, **characterized in that** the covering part (26) is formed by the direct application of foam around the bordering frame (4) and an edge area (5, 27, 28) of the window (6).

2. A tailgate according to Claim 1, **characterized in that** with the exception of an area for the adhesive member (9) the covering part (26) extends over the entire periphery of the cross-sectional shape of the bordering frame (4) as well as an internal edge area (27) and an external edge area (28) of the window (6).

3. A tailgate according to Claim 1, **characterized in that** the bordering frame (4) is formed locally by two pressed parts (17, 18) of sheet metal, joined at parallel flanges (19, 20) at the ends to form a box-shaped hollow support (21).

4. A tailgate according to Claim 1, **characterized in that** the bordering frame (4) is formed locally by an extruded section (8) with a step-shaped profile.

5. A tailgate according to Claim 1, **characterized in that** the bordering frame (4) is produced from light metal (aluminium).

6. A tailgate according to Claim 1, **characterized in that** hinge halves (11), lock receiving means (24) and ball-like articulation points for gas springs are provided on the side of the bordering frame (4) facing the tailgate.

7. A tailgate according to Claim 1, **characterized in that** a transversely extending area (30), towards the rear, and/or longitudinally extending areas (12), situated laterally on the outside, of the bordering frame (4) and of the covering part (26) are formed in such a way that they form an air-guide device (29) at the rear.

8. A tailgate according to Claim 1, **characterized in that** the covering part (26) is arranged along the entire peripheral extension of the bordering frame (4).

9. A tailgate according to Claim 1, **characterized in that** the covering part (26) is provided merely in the rear, transversely extending area (30) and/or along longitudinally orientated areas (12), situated laterally on the outside, of the bordering frame (4) and of the window (6).

10. A method of producing a tailgate according to Claim 1, **characterized in** **that** the window (6), joined on its periphery to the bordering frame (4) by way of an adhesive member (9), together with the bordering frame (4) is inserted into a foaming tool, and then the desired peripheral area of the bordering frame (4) and the window (6) is provided with the application of foam therearound which forms the covering part (26).

## Revendications

1. Hayon arrière (1) d'un véhicule automobile, comportant un châssis (4) qui est collé tout autour avec une zone de bordure d'une vitre (6), le châssis (4) comportant au moins dans une partie de son extension périphérique, un élément de revêtement (26), formé par un corps élastique, reposant contre la face extérieure de la vitre et contre le châssis (4), caractérisé en ce que l'élément de revêtement (26) est formé par enrobage de mousse directement expansée du châssis (4) et d'une zone de bordure (5, 27, 28) de la vitre (6).

2. Hayon arrière selon la revendication 1, caractérisé en ce que l'élément de revêtement (26) s'étend, à l'exception d'une zone pour le corps adhésif (9), sur tout le pourtour de la forme de la section transversale du châssis (4) ainsi que contre une zone de bordure (27) intérieure et une zone de bordure (28) extérieure de la vitre (6).

3. Hayon arrière selon la revendication 1, caractérisé en ce que le châssis (4) est formé localement par deux éléments en tôle emboutie (17, 18), qui sont assemblés à des flasques (19, 20) terminaux dirigés dans le même sens, pour former une poutre creuse (21) en forme de caisson.

4. Hayon arrière selon la revendication 1, caractérisé en ce que le châssis (4) est formé localement par un profilé extrudé (8) de profil étagé.

5. Hayon arrière selon la revendication 1, caractérisé en ce que le châssis (4) est réalisé en métal léger (aluminium).

6. Hayon arrière selon la revendication 1, caractérisé en ce que sur le châssis (4) sont montées des moitiés de charnières (11) côté hayon arrière, des logements de serrure (24) et des points d'articulation à tête sphérique pour ressorts à gaz.

7. Hayon arrière selon la revendication 1, caractérisé en ce qu'une zone (30) située à l'arrière, s'étendant transversalement et/ou des zones (12) situées latéralement à l'extérieur, s'étendant longitudinalement, du châssis (4) et de l'élément de revêtement (26), sont telles qu'elles forment un déflecteur d'air (29) arrière.

8. Hayon arrière selon la revendication 1, caractérisé en ce que l'élément de revêtement (26) est placé le long de toute l'extension périphérique du châssis (4).

9. Hayon arrière selon la revendication 1, caractérisé en ce que l'élément de revêtement (26) est prévu uniquement dans la zone (30) arrière, s'étendant transversalement et/ou le long de zones (12) situées à l'extérieur sur les côtés, dirigées longitudinalement, du châssis (4) et de la vitre (6).

10. Procédé de fabrication d'un hayon arrière selon la revendication 1, caractérisé en ce que la vitre (6) assemblée par un corps adhésif (9) avec le châssis (4), sur son pourtour, est placée avec le châssis (4) dans un outil d'expansion de mousse et en ce qu'ensuite la zone périphérique voulue du châssis (4) et de la vitre (6), est pourvue d'un enrobage de mousse formant l'élément de revêtement (26).
